# EUROPEAN PATENT SPECIFICATION

(11) **EP 2 362 936 B1**
(45) Date of publication and mention of the grant of the patent: **17.10.2012**
(21) Application number: 09747788.9
(22) Date of filing: 28.10.2009
(51) Int. Cl.: G01B 11/24, G01N 21/88

(54) **SCANNER WITH FEEDBACK CONTROL**
SCANNER MIT RÜCKKOPPLUNGSREGELUNG
ANALYSEUR OPTIQUE À BALAYAGE AVEC COMMANDE À RÉTROACTION

(30) Priority: 28.10.2008 DK 200801484
(43) Date of publication of application: 07.09.2011
(73) Proprietor: 3Shape A/S, 1060 Copenhagen (DK)
(72) Inventor: HOLLENBECK, Karl-Josef, DK-2100 Copenhagen Ø (DK); ÖJELUND, Henrik, DK-2800 Lyngby (DK); EDWARDS, Christopher Simon, Hampton Middlesex TW12 1QL (GB); PLASCENCIA, Alfredo Chávez, DK-9000 Aalborg (DK); FISKER, Rune, DK-2830 Virum (DK)
(74) Representative: Münzer, Marc Eric
(86) International application number: PCT/DK2009/050281
(87) International publication number: WO 2010/048960

(56) References cited:
- WO-A1-2007/125081
- DE-A1- 3 119 505
- GB-A- 2 204 947
- US-A- 4 677 302
- US-A- 6 067 306
- US-A1- 2006 217 688
- US-B1- 6 441 908

## Description

The present invention relates to non-contact optical scanning of an object for generation of a three-dimensional surface model of the scanned object.

### Background of the invention

Laser scanners are widely used for many applications, both physically altering the scanned object (fine engraving, welding) or for detecting surface properties (bar code reading, digital three-dimensional surface reconstruction. The basic principle of a laser scanner is to direct a beam at the scanned object. By using optical elements such as lenses or mirrors, the beam can be directed in some spatial pattern, for example a line.

A method for producing a digital three-dimensional model of a physical object is to direct a laser beam onto the surface of the object and record the image with a camera from a different angle. When the relative positions and the internal parameters of the beam generator and the camera are known, the three-dimensional shape of the illuminated part of the object can be computed using triangulation. An improvement of the principle is to use multiple cameras and check the consistency of the triangulation results from each. Scanners used for these purposes are termed "3D scanners."

When directed by one or more rapidly moving mirror(s), the laser beam will appear as a linear pattern in the image, provided the image exposure time is long enough. The above triangulation can then be performed for the entire linear pattern (possibly discretised into points or segments), such that the three-dimensional model of the object can be acquired from fewer images and thus faster. Another way to more rapidly acquire a full three-dimensional model is to move the object while it is scanned, acquiring images continuously.

A problem typically encountered with optical scanners is that the laser beam cannot be properly identified in the image, and thus the triangulation becomes inaccurate. The image is generally acquired with a digital camera, where the intensity of the reflected light is measured in each pixel. The dynamic range of pixel values is generally limited, often to values between 0 and 255. When the scanned object is not made of a single material, and/or when reflection of light is specular, the image intensity will generally be non-uniform. Some pixels in the image may be saturated, while others may fail to detect a weak reflection.

Feedback control of laser power is known in the art. US 6,067,306 describes a semiconductor wafer fabrication system, however pulses of light are used rather than a continuous source. In US 5,307,198 the beam is split into a pilot and refracted beam, with the latter providing the control signal for the former. US 4,256,959 describes an optical scanner with feedback control, however for two-dimensional documents only. US 6,057,537 relates to feedback control in drum-type scanners that direct a laser at a photosensitive film. The regulation is however based on a portion of the incident beam, not the reflection.

US6441908 describes a system and a method for measuring the profile of an external surface of a part. The system includes a source of light that directs light onto a region of the external surface of the part. The system also includes a linear, light-sensitive sensor, and a lens used to image locations within the region onto the sensor. The source of light and the sensor are located substantially within the same plane such that the sensor detects substantially only light scattered, diffracted, or reflected from the region and travelling substantially within the plane. The system additionally includes a re-positionable mirror that re-directs the light emitted from the source of light to the plurality of locations within the region and re-directs light scattered, diffracted, or reflected from the plurality of locations within the region to the lens and the sensor. An automatic gain control system which controls the output power of the source of light to thereby avoid saturating the exposure of the sensor may also be included in the above system.

US4677302A describes a beam (2) of collimated light which is directed towards a printed circuit board (4). The light beam is displaced as reflected from a point of incidence in a path including surfaces having different heights above the printed circuit board when detected at an angle oblique to the surface. From the variation of displacement which is portional to height, the overall profile of the circuit board including components present thereon is determined along the path (56) or line (64) the beam is incident. Various photodetectors (14) are utilized and the addition of a ramp filter (58) enables a single cell integrating photodetector to provide an output intensity indicative of the displacement. An arrangement (Fig. 11) is presented for compensating for variations in surface reflectivity using normalization or feedback.

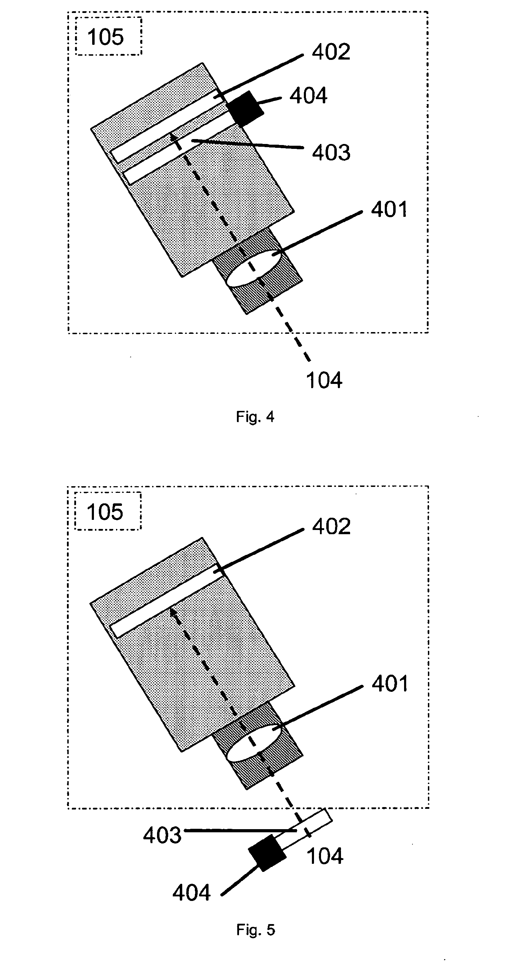

GB2204947A describes a method and system for high-speed, 3-D imaging of an object at a vision station including a flying spot laser scanner, a dynamically configurable spatial filter 33, 34 and a diffuser 35 for spatial averaging (smoothing), which are used in conjunction with a variable transmission filter 36 in an optical depth or height sensing system. The reflected laser signal received by the sensing system is first spatially filtered and averaged at 33, 34, 35 and then spin at 39 into first and second beams 40, 41 which are imaged onto a pair of highly sensitive photodetectors (45, 46, Figure 5) which introduce capability for high-speed, 3-D sensing under low light level conditions. The first split beam passes through the variable transmission filter 36 which is used to encode position which, in turn, is proportional to the depth or height of the object. The second or reference split beam 41 is provided to compensate or changes in the reflectance of the object and the power of the laser scanner. A high-speed signal processing unit 51 normalises the signals from the photodetectors to lie within a predetermined range and computes the ratio of the transmitted signal to the sum of the reference signal and the transmitted signal to determine depth or height information. The signal processing unit also contains noise rejection circuitry which is activated during "off" and "on" periods of laser diode TTL modulation and includes feedback control for pulse amplitude modulation of the laser diode source if necessary to increase dynamic range of the system. The object may be a printed circuit board.

WO 2007/125081 relates to a stripe scanning probe for obtaining the shape of an object by means of a light stripe and a camera detecting the light reflected from the object surface. The scanning probe comprises means for adjusting the intensity of the light stripe, in dependence upon the intensities detected by the camera.

### Summary of the invention

While the intensity of the light in the scanner according to WO 2007/125081 is adjusted to account for the limited dynamic range of the camera, the intensity of the light can only be adjusted after the light has been detected by the camera because the adjustment is dependent upon the intensities detected by the camera.

An object of the invention is therefore to provide a scanner with the ability of adjusting the intensity of the light to account for the limited dynamic range of image sensors, however without being dependent upon the amount of light detected in the image sensor. This is achieved by a scanner for obtaining the three-dimensional geometry of at least a part of the surface of an object, said scanner comprising:
- at least one light source, preferably a laser light source with adjustable power, projection means for directing light from the at least one light source to a moving spot on the surface of the object, where the moving spot appears as a pattern, such as a linear pattern, on the surface of the object,
- at least one image sensor adapted to record at least one image of at least a part of the surface,
- detection means, other than the at least one image sensor, for monitoring at least a part of the light pattern reflected from the surface,
- regulation means for adjusting the intensity of the at least one light source based on the amount of light reflected from the surface where the power of the at least one light source is adapted to be adjusted faster than the frame rate of the at least one image sensor, and
- means for transforming the at least one image to a three-dimensional model of the surface.

The invention furthermore relates to a method for obtaining the three-dimensional geometry of at least a part of the surface of an object, said method comprising the steps of:
- projecting light from at least one light source to a moving spot on the surface of the object, said at least one light source preferably being an adjustable laser light source, and where the moving spot appears as a pattern, such as a linear pattern, on the surface of the object,
- recording at least one image of at least a part of the surface by means of at least one image sensor, and
- monitoring at least a part of the light pattern reflected from the surface by means of at least one detector other than the at least one image sensor,
- adjusting the intensity of the at least one light source based on the amount of light reflected from the surface where the power of the at least one light source is adapted to be adjusted faster than the frame rate of the at least one image sensor, and
- transforming the at least one image to a three-dimensional model of the surface.

The present invention provides a scanning system and a method that can adjust the power of the laser beam such that the recorded intensity in the image can be maintained within the image sensor's dynamic range. The important aspects in this invention are that the feedback control of laser power is independent of the image sensor (camera) system, and that there is no time lag between the image acquisition and the intensity regulation. This advantage can for example be achieved by using a photodiode to supply the feedback control input.

The present invention furthermore significantly expands the application areas of 3D scanners, namely to objects with heterogeneous surface reflectivity. Such heterogeneity occurs, e.g., in composite objects made out of different materials, or objects painted in different colours. Even most homogeneous materials, especially metals, are non-lambertian, i.e., their reflectivity is effectively heterogeneous as it depends on the viewer' angle. Accordingly, traditional 3D scanners require many objects to be coated with a diffusely reflecting agent, often by spraying. This process implies a health risk (small aerosol particles, solvents), and the thickness of the applied layer is difficult to control. The intensity adjustment described in the present invention can make coating obsolete in many cases. Therefore, this invention is particularly attractive for 3D inspection within for example industrial applications, medical applications, and other fields of application.

### Detailed description of the invention

Unlike the optical scanning probe described in WO 2007/125081, this invention relies on a single element detector detecting scattered light from a single, continuously moving spot of light. Neither the generated line of light nor the detector(s) are pixellated, and this technique does not rely on spatial information from the camera or photodiode modules. The feedback control is wholly independent of information from the camera image. Neither is this invention necessarily "digital" in the sense the word is used on page 19 of WO 2007/125081. Either analogue signal processing electronics comprising discrete components can be used or else a digital version of the feedback control can be realised using a field-programmable gate array (FPGA), application specific integrated circuit (ASIC), a application specific standard product (ASSP) or a PC. A mixed signal circuit implementation would also be an embodiment of this invention.

One embodiment of the present invention overcomes the laser line detection problem by way of feedback control of the laser power, thus achieving images where the intensity of the reflected light is within the dynamic range of the sensors. It uses projection means for directing the laser beam, and detection means other than the camera to monitor the reflected light. A key advantage is that the regulation can be much faster than the camera frame rate, so there is no frame delay between detection and regulation. Under optimal conditions, there is not even a sub-frame (image pixel) delay. Such fast feedback control is advantageous when scanning objects with surfaces whose reflectivity varies at small spatial scales (relative to the length of the laser linear pattern). The advantage is even more pronounced when the object being scanned is moved during scanning. Attempts of using the information in images for an earlier position to control laser intensity in a subsequent position have not given acceptable results in such cases.

Various embodiments of this invention have several additional benefits relative to a laser line generated by a cylindrical lens: a reduction in speckle, an improved beam profile, thermal isolation, and a reduction in motion blur when the object being scanned is moved during scanning.

In a preferred embodiment of the invention the light source is preferably adjustable to account for the limited dynamic range of an image sensor, however any adjustment of the intensity of the light source is provided independently of the image sensor. Adjustment of the intensity of the light source is provided as a result of monitoring of light reflected from the surface, where the monitoring of light is provided by the detection means. The detection means preferably comprises at least one photodiode.

Light from the at least one light source is preferably projected as a moving spot by means of at least one mirror, e.g. a galvanometric mirror, adapted to perform at least a rotational movement.

The local intensity of the light on the surface, i.e. the intensity within an area of the surface, can be adjusted by means of varying the motion of the moving spot. I.e. the faster the spot moves, the lower the local intensity. In one embodiment of the invention the projection means can be adjusted to vary the local intensity of light on the surface of the object. This adjustment can preferably be provided by the regulation means. One way of varying the local intensity on the surface is by varying the angular movement of the at least one mirror.

The at least one image sensor in this invention is preferably a part of at least one camera.

In a preferred embodiment of the invention the power of the at least one light source can be adjusted faster than the frame rate of the at least one image sensor, preferably more than 2 times, more than 10 times, more than 50 and most preferably more than 100 times faster than the frame rate of the at least one image sensor. This ensures that there is no time lag between the image acquisition and the intensity regulation.

The intensity of the at least one light source is preferably adjusted by means of at least one feedback control system, for example a feedback control system based on the output from at least one photodiode measuring at least a part of the light reflected from the surface.

The at least one image is preferably transformed to a three-dimensional model of the surface by means of at least one data processor.

To be able to acquire the surface geometry of whole objects, the object must be moved relative to the projected light and the image sensor. Preferably this is provided by movement of the object, thus means for translation and/or rotation of the object relative to the projected light and the at least one image sensor is preferably comprised. Preferably images are acquired by the image sensor for many positions during translation and/or rotation of the object, each image being transformed to a part of the three-dimensional model of the surface. In the special case of a region of the object's surface being represented by multiple images, averaging is preferably applied to derive a unique model of the surface.

Even though the at least one image sensor and the detection means operate independently, it is preferred that the points of observation of the detector and the image sensor are as close as possible. This can be provided if the detection means is semi-transparent and located co-axial with the at least one image sensor. Another solution could be if the detection means are semi-transparent and located inside and/or adjacent to the at least one image sensor, preferably located behind a lens and in front of at least one image sensor. Yet another solution could be with the detection means monitoring the light reflected from at least one beam-splitter, where the beam-splitter is preferably located co-axial with at least one image sensor. Co-axiality of image sensor and detection means is however not a requirement. In other embodiments, multiple photodiode modules are placed in any combination of the above placements.

At least one optical fibre can preferably be provided as a way of transporting the light between the at least one light source and the projection means. Preferably a single-mode optical fibre is used. In one embodiment of the invention spatial filtering is provided through the use of a pigtailed laser diode, spatial filtering is preferably provided to the light before the light is projected on to the object by the projection means.

Some information of the object shape may be known prior to scanning. This prior information can preferably be provided to the scanner before scanning. For example prior information in terms of a CAD model of the object. This prior information can optimise the scan routine and possibly lower the time necessary for scanning of the object.

In one embodiment of the invention a plurality of light sources is comprised, the plurality of light sources preferably providing light at different wavelengths. Preferably the plurality of light sources can be applied one at a time.

At least one optical band pass filter can be provided, for example if the filter has a wavelength transparency window that at least comprises the wavelength of the light source while rejecting unwanted background light. Thereby substantially only the wavelength of the light source is allowed to pass whereby it may be possible to use the scanner in ambient light conditions.

Preferably the scanner according to the invention comprises means for exposing only part of the at least one image sensor. Furthermore the at least one image sensor is preferably synchronised with the projection means. When combined with a rolling shutter, preferably synchronised with the motion of the moving spot, means for synchronising the motion of the moving spot with the reading of at least one image sensor is provided. A rolling shutter exposes only part of the at least one image sensor. Said at least one image sensor preferably comprises an image sensor array. Thus, a rolling shutter will expose only a subset of the rows and/or columns of the image sensor array.

A particular advantage of the scanning mirror can be realized when the image sensor is a pixel array and the object or the scanner is moved during the acquisition of images. In this constellation, the motion of the moving beam spot can be synchronized with the reading of sections within the pixel array. Each section of pixels then has an effective exposure time shorter than that of an entire frame, but still capturing substantially the same amount of light as it would for the entire frame's exposure time. Thereby motion blur in the image can be reduced. Another advantage is that the feedback control electronics can become easier and/or cheaper to realize when the beam spot makes only one sweep over the imaged area during one frame.

### Drawings

The invention will now be described in more detail with reference to the drawings, in which
Figure 1: is an overview of the invention. It represents one embodiment of the invention, with a single photodiode module placed next to a camera.
Figure 2A is a front view of the line generator module, said module being a particular embodiment of the laser light source 102 of Figure 1.
Figure 2B is a top view of the line generator module.
Figure 3: is a photodiode module, which is a photodiode with a pre-amplifier circuit.
Figure 4: is a feedback control system with a semi-transparent photodiode placed co-axially with a camera, behind the camera's lens, but in front of the camera's image sensor.
Figure 5: is a feedback control system with a semi-transparent photodiode placed co-axially with a camera, in front of the camera's lens.
Figure 6: is a feedback control system with a beam-splitter placed co-axially with a camera, and a photodiode module placed in the direction of the beam-splitter's reflection.
Figure 7: is a feedback control system with multiple photodiode modules placed next to a camera.
Figure 8: illustrates three possible placements of multiple photodiode modules (or an annular photodiode) relative to a camera.
Figure 9: shows some experimental results that demonstrate the effectiveness of this invention.
Figure 10: shows further experimental results also demonstrating the effectiveness of this invention.

### Detailed description of the drawings

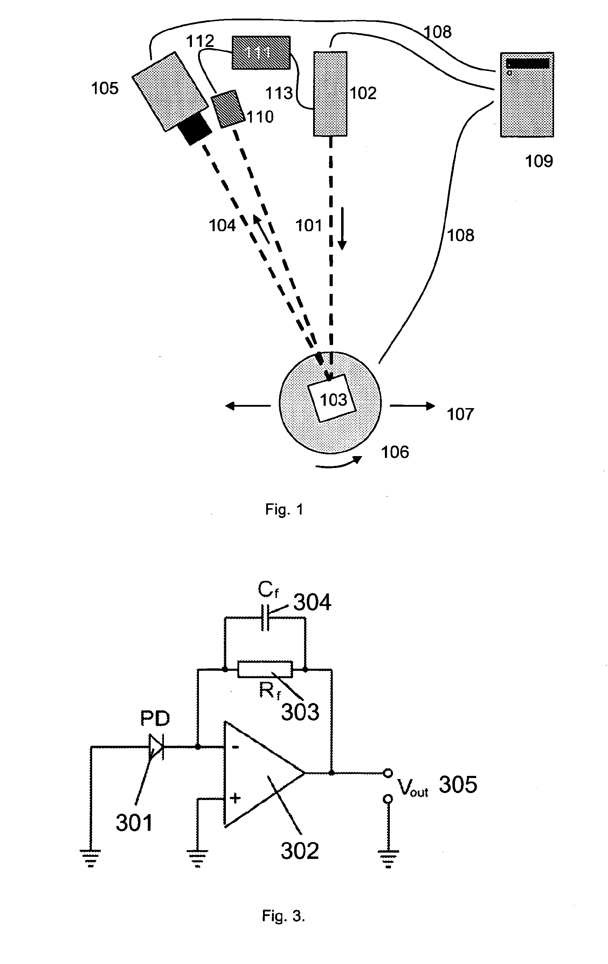

Many scanner systems basically function the same way, see Figure 1: A monochromatic or multi spectral light pattern 101 such as laser dots, laser lines, white or coloured stripes, is projected from a light source 102 onto the object 103. The projected light is then reflected **104** and one or more cameras **105** acquire images of the projection.

For a preferred embodiment of this invention, the light source **102** must be one whose intensity can be regulated at high frequencies. In this context, "high" means at least 100 times the frame rate of the camera **105.** Lasers - who's input power can be modulated - generally fulfil this requirement. In the following description of various embodiments of the scanner according to the invention, it is therefore assumed that **102** is a laser light source.

In 3D scanners, the above mentioned light pattern is detected in the image and well established projection geometry such as triangulation or stereo is used to derive the 3D coordinates, e.g. a line laser is projected onto the object forming a line. The 3D coordinates are then reconstructed along that particular line. The scanner may contain one or more light sources and one or more cameras.

In 3D scanners, the next step is then to move the object and scanner relative to each other e.g. by rotation **106** or linear motion **107** of the object **103.** This way the 3D scanner can reconstruct the surface on a new part of the object, e.g. a new line on the surface in the line laser example.

Camera, light source and motion system are all connected **108** to some controlling electronic equipment (usually a computer) **109,** which communicates with and controls each component. The computer **109** might be a separate unit or integrated into the scanner.

This invention differs from the prior art in the regulation of the power of the laser light source **102** by feedback control, given the signal detected by a photodiode module **110.** This photodiode module also captures the reflected light **104.** The photodiode module's output **112** is sent to signal processing electronics **111,** which then continuously regulate the power of the light source via connection **113.** The placement of a single photodiode module **110** as shown in Figure 1 is only one embodiment of this invention; other examples are illustrated in Figures 4, 5, 6, 7, and 8.

The photodiode module **110** typically consists of a photodiode and generally a trans-impedance pre-amplifier. In one embodiment of the invention, the pre-amplifier is integrated within the photodiode itself, in another embodiment the pre-amplifier is made from discrete circuit components.

The motion system **106,107** is not an essential part of the invention. For example, one embodiment of this invention could be a scanning probe composed of light source **102,** one or more cameras **105,** photodiode(s) **110,** and signal processing electronics **111,** with connections **112** and **113.** This scanning probe could then be mounted on an external motion system, for example a Coordinate Measurement Machine.

### Line generator module

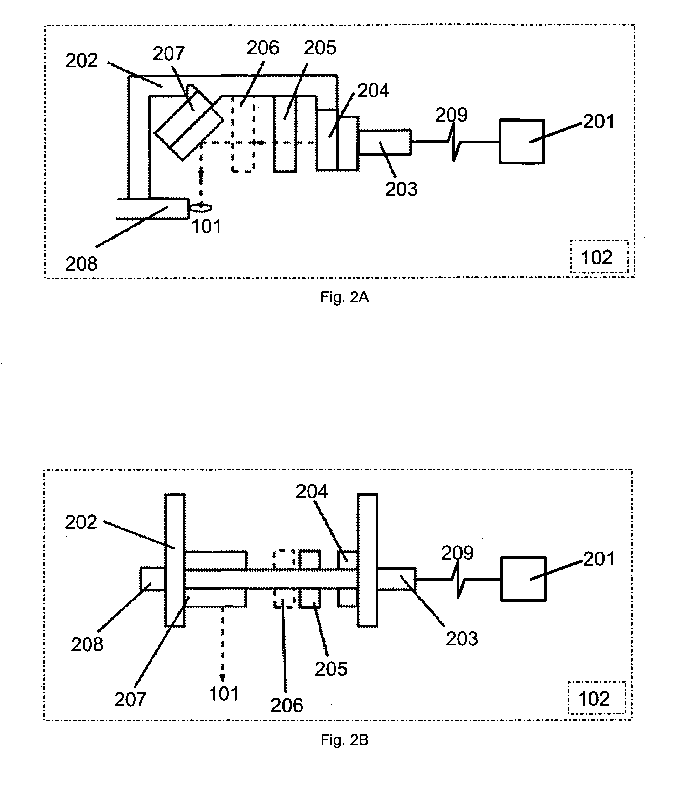

A particular embodiment of the light source 102 of Figure 1 is described in detail in the following, and also shown in Figures 2A and 2B. It uses a galvanometric scanning mirror assembly (hereafter referred to as a scanning mirror) to rapidly project a spot, thus effectively appearing as a quasi-continuous line of light, onto an object to be scanned. In the following this assembly is termed "line generator module". In one embodiment of the invention the line generator module consists of a pig-tailed laser diode **201,** a mounting frame **202,** a fibre collimator **203** connected to a pig-tailed laser diode **201** and its controller, an adjustable mount **204,** a focusing lens **205** (with an optional additional lens **206),** a beam-steering mirror **207** and the scanning mirror **208,** giving the projected light pattern **101** also shown in Figure 1. Note that in Fig 2A, the projected light pattern leaves the line generator module in the direction normal to the drawing plane. The optical fibre **209** connects the laser diode with the fibre collimator **203.** The fibre is generally much longer than the wavelength of the light, preferably longer by a factor of at least 10,000.

In one embodiment of the line generator module, the beam steering mirror **207** is a galvanometric scanning mirror assembly, but it could also be a rotating mirror with one or multiple facets, or a set of mirrors. Acousto-optical modulators/deflectors (AOM) could also be used for fast beam sweeping.

In the described embodiment of a line generator module, the pig-tailed laser diode **201** can easily be replaced by another of different wavelength, or both the laser diode **201** and the fibre **209** can be replaced. Besides from switching light source manually, an elegant solution is to combine two or more wavelengths of laser light on a dichroic mirror either after but preferably before the optical fibre **209.** This enables the line generator module to operate with different wavelengths and switching between these wavelengths temporally without physical changes to the module. In this fashion differences in the absorptive and/or reflective properties of the scanned material with respect to wavelength can be exploited. Alternatively a fibre coupler may be used instead of the dichroic mirror (e.g. a 2 x 2 coupler or a 2 x 1 coupler). Furthermore, a laser diode with shorter wavelength can achieve a narrower beam width for a given depth of focus, improving the triangulation of the 3D scanner. The additional lens **206** can be used to compensate for differences in focusing properties of different wavelengths. For example, it can be flipped into and out of the beam. Alternatively, a single voltage-tunable lens (e.g. of the kind used in cellular telephone cameras) can be used in place of the two lenses **205** and **206.**

### Photodiode module

One embodiment of the photodiode module **110** is shown in detail in Figure 3. It comprises a photodiode (PD **301)** with a trans-impedance pre-amplifier (typical electronic schematic shown in Fig 3, using an operational amplifier **302,** where the trans-impedance gain is set by the value of feedback resistor *R*_{f} **303** and the feedback capacitor *C*_{f} **304** is used to set the amplification bandwidth; the output signal is a voltage *V*ₒᵤₜ **305).** In one embodiment of the invention the pre-amplifier is integral within the photodiode itself, in another embodiment the pre-amplifier is made from discrete circuit components.

### Feedback control

The technique of feedback control is commonly used in the field of atomic spectroscopy where it is called "optical power stabilisation" (see e.g. [1]). In general, the techniques employed aim to stabilise the optical power incident on the spectroscopic sample under illumination. However, an alternative approach, adopted in this invention, is to stabilise the scattered optical power level. In experimentally demonstrating this invention we have employed some analogue feedback control circuitry, designed and developed for a two-photon rubidium optical frequency standard for use at 778 nm [1], to stabilise the optical power incident on a photodiode.

Various embodiments of this invention differ with respect to the placement and/or number of the photodiode module(s) **110.** The type of photodiode **110** can also differ in the various embodiments. In all embodiments, the photodiode module(s) **110** are used to detect scattered light from the object **103** being scanned by the output of the laser light source **102,** with a particular embodiment of said light source **102** being the line generator module of Figure 2A and 2B. In all embodiments, the output(s) of the photodiode module(s) **110** provide a feedback signal **117** to the signal processing electronics **111.** Details on the various embodiments are disclosed below.

The amplification bandwidth of the photodiode module(s) **110,** feedback signal bandwidth and laser diode modulation bandwidth are closely matched for optimum signal-to-noise-ratio (SNR) in relation to overall signal bandwidth. This bandwidth will determine the fastest camera frame-rate achievable for a given spatial resolution. The detected DC light level is compared with a reference level (preset either by the operator or by a PC/FPGA), and a feedback signal applies a real-time correction to the laser output power via the modulation port of the laser diode driver. The feedback control function is a linear summation of proportional, integral and derivative control terms (which may include secondary and tertiary integrators, see e.g. [2]), and the gains and time constants are optimised with the two principal bandwidth limitations (photodiode pre-amplifier bandwidth and diode modulation bandwidth) in mind. The analogue signal processing electronics can be replaced by an equivalent feedback control function implemented in FPGA, ASIC or ASSP (or via a PC).

In case there are multiple cameras **105,** each can have its own photodiode module **110.** The input to the signal processing electronics **111** should either be the output of one of these photodiode modules **110** (nominated by the operator or PC/FPGA) or a summation of the photodiode signals (summed in ratio set by the operator or PC/FPGA).

### Digital supervision

Digital supervision of the feedback control can be used to ensure the signal processing electronics output is set to "hold" mode when a discontinuity is detected (e.g. when the laser spot disappears down a hole in the scanned object **103** and no scattered light is incident on the photodiode). These discontinuities can be detected either by monitoring the output of the photodiode module **110** or monitoring the feedback signal. When light is restored on the photodiode **110,** the feedback control resumes normal operation.

When scanning an object which is highly absorptive and consequently scatters very little light back to the camera(s) **105,** the conventional feedback control described above may fail to give sufficient intensity in the camera images. In such case, the signal processing electronics output would be detected at its maximum permitted value for a significant portion of the time. Then, as a method of last resort, the digital supervision can reduce the angular range of motion of the beam-steering mirror **207.** This will reduce the length of the projected line (thus increase the time needed to perform the 3D scan), but also give the appearance of greater intensity in the camera images. Conversely, the digital supervision can increase the length of the projected line for very reflective materials (when the signal processing electronics output would be detected at its minimum permitted value for a significant proportion of the time). Note that unlike the afore-mentioned feedback-control of laser power, a change of motion angle range would only take effect in subsequent image frames. Also, not all embodiments of this invention allow a change in the motion angle range (e.g., a rotating mirror does not).

In some applications of the 3D laser scanner, the geometry of the scanned object may be known at least approximately, for example if a CAD model of the scanned object **103** is provided. Such knowledge, for example about the location of holes from which no reflection can be expected, may be exploited in the digital supervision. Care must however be taken that the a-priori information does not dominate the scanning results, especially in situations where the actual object's **103** geometry deviates from the CAD model.

### Co-axial detection

In many respects the most technically elegant embodiment of this invention is to use a semi-transparent photodiode **403** immediately in front of the camera's active array **402,** behind the lens **401** (Fig 4). The semi-transparent photodiode **403** may be separate from the camera array **402,** or it may be incorporated as an integral part of the array (as a thin film layered device immediately before the array). The pre-amplifier for the semi-transparent photodiode **403** must be placed such that is does not obstruct the path of light. For reference, note that the semi-transparent photodiode **403** and the pre-amplifier **404** make up the photodiode module **110** in this embodiment. In the configuration of Figure 4 the photodiode module is thus - unlike in Figure 1 - an integral part of the camera **105.**

In embodiment a semi-transparent photodiode **403** is provided immediately before the camera lens **401** (Figure 5). As in the previous embodiment, the pre-amplifier for the photodiode **404** must be placed such that is does not obstruct the path of light. Again for reference, the semi-transparent photodiode **403** and the pre-amplifier **404** make up the photodiode module **110** in this embodiment.

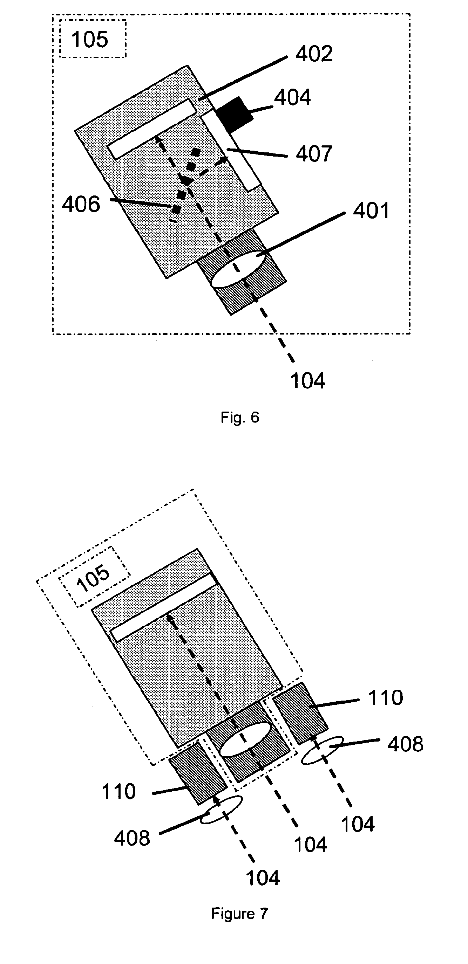

If a semi-transparent photodiode is unavailable and a non-transparent photodiode module must be used, then a beam-splitter **406** may be placed immediately after the camera lens **401** to split the incoming beam into a portion going to the camera array **402** and another going to the non-transparent photodiode **407** (Figure 6). Alternatively, the pick-off beam-splitter **406** could be placed immediately before the camera lens **401** (in the same sense as is the difference between Figs. 4 and 5). Where a beam-splitter is used, an optional lens may be added to increase light collection for the non-transparent photodiode **407.** Again for reference, the non-transparent photodiode **407** and the pre-amplifier **404** make up the photodiode module **110** in this embodiment.

### Off-axis detection

If co-axial location of the photodiode module **110** is not a practical option, it may be acceptable to place it slightly off the optical path to the camera, next to the camera (Figure 1). An optional lens may be added to increase light collection for the photodiode module **110.**

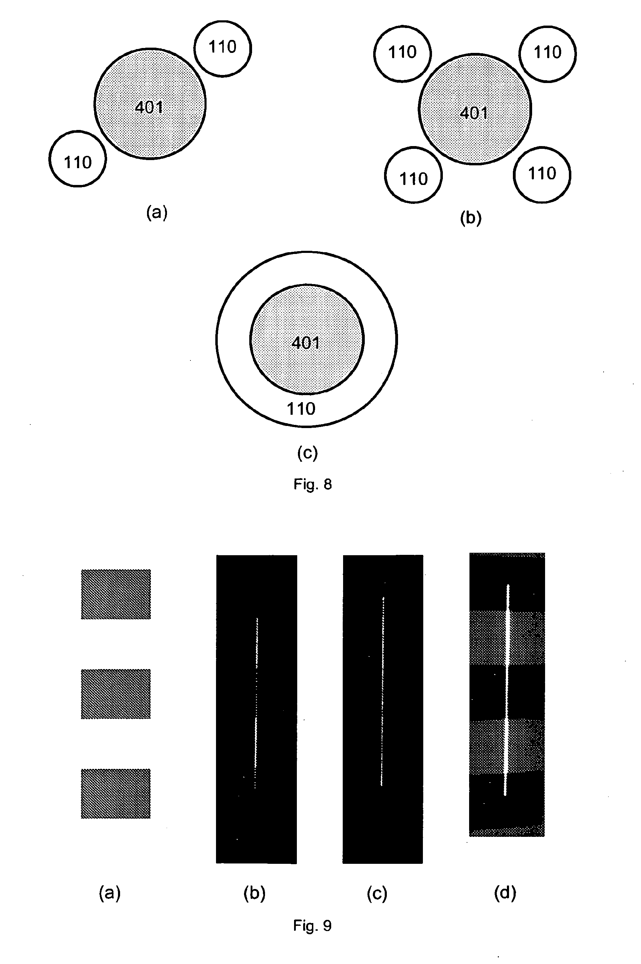

Using an array of photodiode modules **110** grouped around the camera position is expected to give improved performance (Figs. 7 and 8(a), 8(b), with Figure 8 showing the camera lens **401** from the front). Optionally, lenses **408** may be added to increase light collection for the photodiode modules **110.** Another embodiment uses an annular photodiode module **110** co-axially with the camera lens **401** (Figure 8 (c)).

### Speckle reduction

The line generator module has been observed to reduce speckle as compared to a laser in which a cylindrical lens is used to generate a line. In this context, speckle was measured as the variance of pixel values in images of the laser line. This variance was reduced by more than 20%. This reduction may be due to averaging effects when the beam sweeps the same surface several times during a frame, with slight differences in path in every sweep (due to mechanical imperfection in the galvanometric scanning mirror). Reduced speckle is beneficial for 3D scanning, as the detection of the beam in the image and thus eventually triangulation becomes more accurate.

### Spatial filtering

On embodiment of the invention uses spatial filtering of the light source prior to the line generator module in order to improve the beam quality of the scanning spot and hence the optical properties of the generated line. This improved quality results in better spatial resolution and precision of the overall optical scanning, resulting in reduced scatter and dimensional uncertainty in the three-dimensional model of the surface. In one embodiment of the invention the spatial filtering is achieved through the use of a pigtailed laser diode. It is advantageous to use a single-mode optical fibre rather than a multi-mode optical fibre.

### Rolling shutter

It may be advantageous to synchronize the motion of the laser beam as achieved by the scanning mirror **208** with the reading of the camera array **402.** This is possible if said camera array **402** can be read with a rolling shutter, exposing only a subset of rows of pixels sequentially during acquisition of a frame. In this case, the subset of rows can be made to follow the image of the beam spot on the scanned object **103.** Each window thus has an exposure time smaller than the frame time, but still collects (almost) as much light as it would if the shutter exposed the entire camera array. One way to synchronize the shutter with the scanning mirror is to set the scanning mirrors sweep frequency equal to the frame rate of the camera array, and then to adjust the phase shift at the scanning mirror until a maximum of light is collected.

When the laser beam and shutter are synchronized, the beam sweeps the same surface only once during a frame, i.e. at the smallest possible speed for which a full image can be obtained. Accordingly, for a given object **103** with non-uniform reflectivity, the rate of change in the signal detected by a photodiode module **110** is smallest, too. Accordingly, the bandwidth requirements for the processing electronics **111** are smallest when beam and shutter are synchronized.

A rolling shutter is particularly beneficial when the scanned object **103** is moved while being scanned, because the degree of motion blur in the images acquired by the camera(s) **105** can be reduced. Moving the object during the scan is desirable because total scan time can be reduced.

### Thermal isolation

One embodiment of the invention achieves very effective thermal separation of the heat generation associated with the laser source **201** (and its associated electronics) and the remainder of the line generator module. This is achieved by using fibre-optic delivery **209** of the light to the line generator, allowing remote location of the laser source, and the resultant thermal isolation is beneficial both in terms of the dimensional stability of the line generator module and also in removing a heat source from the measurement volume of the 3D scanner. It also isolates a heat source from other heat-sensitive components of the invention, in particular the camera(s).

### Polarizing optics

For shiny objects, it can be advantageous to place polarizing optics in the light path. The polarizing optics can be set to enhance the relative contribution of the specular reflection in the signal detected by the photodiode(s) **110** and the images recorded by the camera(s) **105.** Preferably, some polarizing optics are used to control the polarization state of in the emitted light **101,** and other polarizing optics are inserted to filter the reflected light **104.** The filtering effect must be at least very similar for both the camera(s) **105** and photodiode(s) **110** in order for the feedback-control mechanism to work properly.

### Specimen results

Some results obtained using a slightly offset photodiode module **110** (Figure 1) are shown in Figure 9. The scanned object in this case was a sheet of paper with a printed light and dark alternating pattern (Figure 9 (a)). Without feedback control of laser power (Figure 9 (b)), the image shows the laser line only in the light areas, where there is sufficient reflection. With feedback control applied (Figure 9 (c)), the uniformity of the recorded light line is substantially improved. This improvement has also been observed for a variety of materials and surface finishes. Figure 9 (d) shows the pattern with the room lights on, illuminated without feedback control as in (b), but with higher laser power. In this case, the line becomes visible also on the dark areas, but in the light areas, many pixels image saturate, whereby the line appears wider and thus less suitable for triangulation purposes.

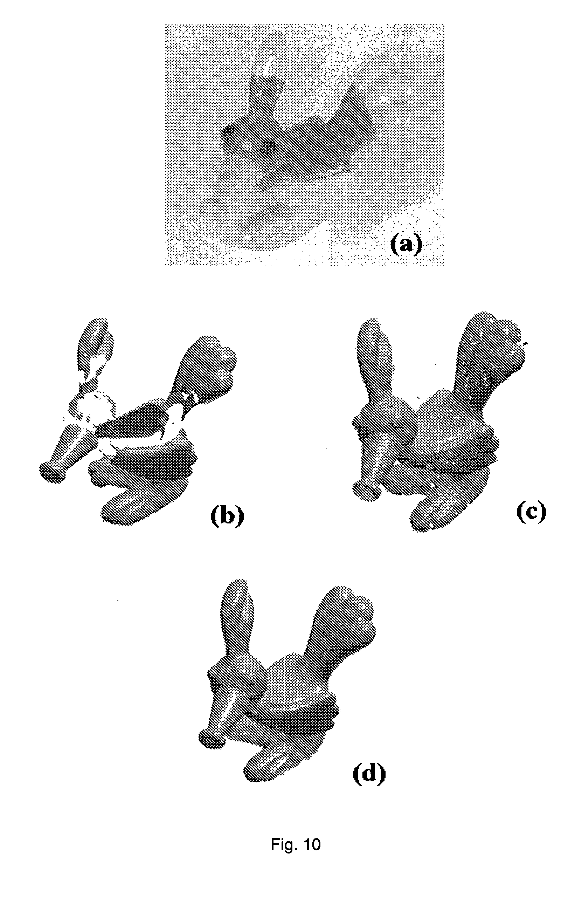

The benefit of the invention for generating 3D models is shown in Figure 10 for a small toy that has patches of surface with different reflectivity seen from a traditional 2D image of the toy (Figure 10 (a)). With a traditional 3D scanner with constant pre-set laser light intensity, the user has to choose between two poor alternatives. Either the user can choose a low intensity, yielding a good 3D surface model of the highly reflective patches, but with holes for the dark patches (Figure 10 (b)). Alternatively, the user can choose a high intensity, avoiding any holes, but at the expense of a noisy (rough) surface representation of the highly reflective patches due to saturation in the underlying scanner images (Figure 10 (c)). The scanner according to this invention, in contrast, captures all surfaces well and thus yields a good complete 3D model (Figure 10 (d)).

### References

[1] C. S. Edwards, G. P. Barwood, H. S. Margolis, P. Gill and W. R. C. Rowley, "Development and absolute frequency measurement of a pair of 778 nm two-photon rubidium standards", Metrologia, 42, 464-467 (2005).
[2] J. Helmcke, S. A. Lee and J. L. Hall, "Dye laser spectrometer for ultrahigh resolution: design and performance", Applied Optics, 21, 1686-1694 (1982).

## Claims

1. A scanner for obtaining the three-dimensional geometry of at least a part of the surface of an object (103), said scanner comprising :
- at least one light source (102) preferably a laser light source with adjustable power,
- projection means for directing light from the at least one light source to a moving spot on the surface of the object, where the moving spot appears as a pattern, such as a linear pattern, on the surface of the object,
- at least one image sensor (105) adapted to record at least one image of at least a part of the surface,
- detection means (110) other than the at least one image sensor, for monitoring at least a part of the light pattern reflected from the surface,
- regulation mean (111) for adjusting the intensity of the at least one light source based on the amount of light reflected from the surface, where the power of the at least one light source is adapted to be adjusted faster than the frame rate of the at least one image
- means (109) for transforming the at least one image to a three-dimensional model of the surface.

2. A scanner according to claim 1, wherein the detection means monitors light independent of the at least one image sensor, and/or wherein adjustment of the intensity of the light source is provided independently of the image sensor.

3. A scanner according to any of the preceding claims, wherein the light is projected as a moving spot by means of at least one mirror adapted to perform at least a rotational movement.

4. A scanner according to any of the preceding claims, wherein the projection means can be adjusted to vary the local intensity of light on the surface of the object.

5. A scanner according to any of the preceding claims, wherein the power of the at least one light source is adjusted preferably more than 2 times, more than 10 times, more than 50 and most preferably more than 100 times faster than the frame rate of the at least one image sensor.

6. A scanner according to any of the preceding claims, wherein light reflected from the surface is detected by means of at least one photodiode.

7. A scanner according to any of the preceding claims, wherein the intensity of the at least one light source is adjusted by means of at least one feedback control system.

8. A scanner according to claim 7, wherein the feedback control system adjusts the intensity of the at least one light source based on the output from at least one photodiode measuring at least a part of the light reflected from the surface.

9. A scanner according to any of the preceding claims, wherein spatial filtering is applied to at least one light source, preferably before the light is directed towards the object by the projection means.

10. A scanner according to any of the preceding claims, further comprising a plurality of light sources, said light sources preferably providing light in different wavelengths and/or said light sources preferably applicable one at a time.

11. A scanner according to any of the preceding claims, wherein the detection means comprises at least one optical band pass filter with a wavelength transparency window that at least comprises the wavelength of the light source while rejecting unwanted background light.

12. A scanner according to any of the preceding claims, wherein the at least one image sensor is synchronised with the projection means.

13. A scanner according to any of the preceding claims, further comprising means for exposing only part of the at least one image sensor.

14. A scanner according to any of the preceding claims, further comprising a rolling shutter for exposing only part of the at least one image sensor, such as exposing only a subset of the rows and/or columns of an image sensor array, wherein the rolling shutter is synchronised with the motion of the moving spot.

15. A method for obtaining the three-dimensional geometry of at least a part of the surface of an object (103), said method comprising the steps of:
- projecting light from at least one light source (102) to a moving spot on the surface of the object (103), said at least one light source preferably being an adjustable laser light source, and where the moving spot appears as a pattern, such as a linear pattern, on the surface of the object,
- recording at least one image of at least a part of the surface by means of at least one image sensor (105),
- monitoring at least a part of the light pattern reflected from the surface by means of at least one detector (110) other than the at least one image sensor,
- adjusting the intensity of the at least one light source based on the amount of light reflected from the surface, where the power of the at least one light source is adapted to be adjusted faster than the frame rate of the at least one image sensor and
- transforming the at least one image to a three-dimensional model of the surface.

## Patentansprüche

1. Scanner zum Erhalten der dreidimensionalen Geometrie von mindestens einem Teil der Oberfläche eines Objekts (103), wobei der besagte Scanner aufweist:
- mindestens eine Lichtquelle (102), vorzugsweise eine Laser-Lichtquelle mit einstellbarer Leistung,
- Projektionsmittel zum Richten von Licht von mindestens einer Lichtquelle auf einen sich bewegenden Punkt auf der Oberfläche des Objekts, wobei der bewegliche Punkt als ein Muster wie ein lineares Muster auf der Oberfläche des Objekts erscheint,
- mindestens einen Bildsensor (105), angepasst, um mindestens ein Bild von mindestens einem Teil der Oberfläche aufzuzeichnen,
- andere Detektionsmittel (110) als der mindestens eine Bildsensor zum Überwachen mindestens eines Teils des von der Oberfläche reflektierten Lichtmusters,
- Regelmittel (111) für die Anpassung der Intensität der mindestens einen Lichtquelle basierend auf der Menge des an der Oberfläche reflektierten Lichts, wobei die Leistung der mindestens einen Lichtquelle angepasst wird, um schneller als die Bildrate des mindestens einen Bildsensors eingestellt zu werden, und
- Mittel (109) für die Umwandlung des mindestens einen Bildes in ein dreidimensionales Modell der Oberfläche.

2. Scanner nach Anspruch 1, wobei die Detektionsmittel das Licht unabhängig von dem mindestens einen Bildsensor überwachen und/oder die Anpassung der Intensität der Lichtquelle unabhängig von dem Bildsensor bereitgestellt wird.

3. Scanner nach einem beliebigen der vorhergehenden Ansprüche, wobei das Licht von mindestens einem Spiegel, angepasst, um mindestens eine Drehbewegung auszuführen, als bewegter Punkt projiziert wird.

4. Scanner nach einem beliebigen der vorhergehenden Ansprüche, wobei die Projektionsmittel eingestellt werden können, um die lokale Intensität des Lichts auf der Oberfläche des Objekts zu verändern.

5. Scanner nach einem beliebigen der vorhergehenden Ansprüche, wobei die Leistung der mindestens einen Lichtquelle vorzugsweise mehr als 2 Mal, mehr als 10 Mal, mehr als 50 und am bevorzugtesten mehr als 100 Mal schneller als die Bildrate des mindestens einen Bildsensors eingestellt wird.

6. Scanner nach einem beliebigen der vorhergehenden Ansprüche, wobei das an der Oberfläche reflektierte Licht von mindestens einer Photodiode detektiert wird.

7. Scanner nach einem beliebigen der vorhergehenden Ansprüche, wobei die Intensität der mindestens einen Lichtquelle mit mindestens einem Rückkopplungsregelungssystem eingestellt wird.

8. Scanner nach Anspruch 7, wobei das Rückkopplungsregelungssystem die Intensität der mindestens einen Lichtquelle basierend auf dem Ausgangssignal der mindestens einen Photodiode einstellt, die mindestens einen Teil des an der Oberfläche reflektierten Lichts misst.

9. Scanner nach einem beliebigen der vorhergehenden Ansprüche, wobei auf mindestens eine Lichtquelle räumliche Filterung angewandt wird, vorzugsweise bevor das Licht von den Projektionsmitteln auf das Objekt gerichtet wird.

10. Scanner nach einem beliebigen der vorhergehenden Ansprüche, ferner aufweisend eine Mehrzahl von Lichtquellen, wobei die besagten Lichtquellen vorzugsweise Licht in verschiedenen Wellenlängen bereitstellen und/oder die besagten Lichtquellen vorzugsweise abwechselnd anwendbar sind.

11. Scanner nach einem beliebigen der vorhergehenden Ansprüche, wobei die Detektionsmittel mindestens einen optischen Bandpassfilter mit einem Fenster für die Transparenz der Wellenlänge aufweisen, das beim Zurückweisen unerwünschten Hintergrundlichts mindestens die Wellenlänge der Lichtquelle aufweist.

12. Scanner nach einem beliebigen der vorhergehenden Ansprüche, wobei der mindestens eine Bildsensor mit den Projektionsmitteln synchronisiert ist.

13. Scanner nach einem beliebigen der vorhergehenden Ansprüche, ferner aufweisend Mittel für die Belichtung nur eines Teils des mindestens einen Bildsensors.

14. Scanner nach einem beliebigen der vorhergehenden Ansprüche, ferner aufweisend eine Rollblende für die Belichtung nur eines Teils des mindestens einen Bildsensors wie die Belichtung nur einer Teilmenge der Zeilen und/oder Spalten einer Bildsensorreihe, wobei die Rollblende mit der Bewegung des sich bewegenden Punkts synchronisiert ist.

15. Verfahren zum Erhalten der dreidimensionalen Geometrie von mindestens einem Teil der Oberfläche eines Objekts (103), wobei die Methode folgende Schritte aufweist:
- Projizieren von mindestens einer Lichtquelle (102) auf einen sich bewegenden Punkt auf der Oberfläche des Objekts (103), wobei die besagte mindestens eine Lichtquelle vorzugsweise eine einstellbare Laser-Lichtquelle ist und der bewegliche Punkt als ein Muster wie ein lineares Muster auf der Oberfläche des Objekts erscheint,
- Aufzeichnen mindestens eines Bildes von mindestens einem Teil der Oberfläche mit mindestens einem Bildsensor (105),
- Überwachen mindestens eines Teils des von der Oberfläche reflektierten Lichtmusters von mindestens einem anderen Detektor (110) als dem mindestens einen Bildsensor,
- Einstellen der Intensität der mindestens einen Lichtquelle basierend auf der Menge von an der Oberfläche reflektierten Lichts, wobei die Leistung der mindestens einen Lichtquelle angepasst wird, um schneller als die Bildrate des mindestens einen Bildsensors eingestellt zu werden, und
- Umwandeln des mindestens einen Bildes in ein dreidimensionales Modell der Oberfläche.

## Revendications

1. Scanneur pour obtenir la géométrie en trois dimensions d'au moins une partie de la surface d'un objet (103), ledit scanneur comprenant :
- au moins une source de lumière (102), de préférence une source de lumière laser avec une puissance ajustable,
- des moyens de projection pour diriger de la lumière de la au moins une source de lumière à un point mobile sur la surface de l'objet, le point mobile apparaissant sous la forme d'un motif, tel qu'un motif linéaire, sur la surface de l'objet,
- au moins un capteur d'images (105) qui est à même d'enregistrer au moins une image d'au moins une partie de la surface,
- des moyens de détection (110) autres que le au moins un capteur d'images pour contrôler au moins une partie du motif lumineux réfléchi par la surface,
- des moyens de régulation (111) pour ajuster l'intensité de la au moins une source de lumière sur la base de la quantité de lumière réfléchie par la surface, la puissance de la au moins une source de lumière étant à même d'être ajustée plus rapidement que la fréquence d'image du au moins un capteur d'image, et
- des moyens (109) pour transformer la au moins une image en un modèle tridimensionnel de la surface.

2. Scanneur selon la revendication 1, dans lequel les moyens de détection contrôlent la lumière indépendamment du au moins un capteur d'images et/ou dans lequel l'ajustement de l'intensité de la source de lumière est effectué indépendamment du capteur d'images.

3. Scanneur selon l'une quelconque des revendications précédentes, dans lequel la lumière est projetée sous la forme d'un point mobile au moyen d'au moins un miroir qui est à même d'effectuer un mouvement rotatif.

4. Scanneur selon l'une quelconque des revendications précédentes, dans lequel les moyens de projection peuvent être ajustés pour faire varier l'intensité locale de la lumière à la surface de l'objet.

5. Scanneur selon l'une quelconque des revendications précédentes, dans lequel la puissance de la au moins une source de lumière est ajustée de préférence plus de 2 fois, plus de 10 fois, plus de 50 fois et, mieux encore, plus de 100 fois plus rapidement que la fréquence d'image du au moins un capteur d'image.

6. Scanneur selon l'une quelconque des revendications précédentes, dans lequel la lumière réfléchie par la surface est détectée au moyen d'au moins une photodiode.

7. Scanneur selon l'une quelconque des revendications précédentes, dans lequel l'intensité de la au moins une source de lumière est ajustée au moyen d'au moins un système de commande à rétraction.

8. Scanneur selon la revendication 7, dans lequel le système de commande à rétroaction ajuste l'intensité de la au moins une source de lumière sur la base de la sortie d'au moins une photodiode mesurant au moins une partie de la lumière réfléchie par la surface.

9. Scanneur selon l'une quelconque des revendications précédentes, dans lequel un filtrage spatial est appliqué à au moins une source de lumière, de préférence avant que la lumière ne soit dirigée vers l'objet par les moyens de projection.

10. Scanneur selon l'une quelconque des revendications précédentes, comprenant en outre une pluralité de sources de lumière, lesdites sources de lumière fournissant de préférence de la lumière dans différentes longueurs d'onde et/ou lesdites sources de lumière s'appliquant de préférence à raison d'une à la fois.

11. Scanneur selon l'une quelconque des revendications précédentes, dans lequel les moyens de détection comprennent au moins un filtre optique à bande passante avec une fenêtre dotée d'une transparence aux longueurs d'onde qui comprend au moins la longueur d'onde de la source de lumière tout en rejetant la lumière de fond non souhaitée.

12. Scanneur selon l'une quelconque des revendications précédentes, dans lequel le au moins un capteur d'image est synchronisé avec les moyens de projection.

13. Scanneur selon l'une quelconque des revendications précédentes, comprenant en outre des moyens pour exposer seulement une partie du au moins un capteur d'images.

14. Scanneur selon l'une quelconque des revendications précédentes, comprenant en outre un obturateur roulant pour exposer seulement une partie du au moins un capteur d'images, notamment en exposant uniquement un sous-ensemble des rangées et/ou des images d'un aménagement de capteurs d'image dans lequel l'obturateur roulant est synchronisé avec le mouvement du point mobile.

15. Procédé permettant d'obtenir la géométrie en trois dimensions d'au moins une partie de la surface d'un objet (103), ledit procédé comprenant les étapes consistant à _{:}
- projeter de la lumière d'au moins une source de lumière (102) sur un point mobile à la surface de l'objet (103), ladite au moins une source de lumière étant de préférence une source de lumière laser ajustable et où le point mobile apparaît sous la forme d'un motif, tel qu'un motif linéaire, à la surface de l'objet,
- enregistrer au moins une image d'au moins une partie de la surface au moyen d'au moins un capteur d'images (105),
- contrôler au moins une partie du motif lumineux réfléchi par la surface au moyen d'au moins un détecteur (110) autre que le au moins un capteur d'images,
- ajuster l'intensité de la au moins une source de lumière sur la base de la quantité de lumière réfléchie par la surface, la puissance de la au moins une source de lumière étant à même d'être ajustée plus rapidement que le taux d'images du au moins un capteur d'images, et
- transformer la au moins une image en un modèle tridimensionnel de la surface.
